# EUROPEAN PATENT APPLICATION

(11) **EP 4 273 673 A1**
(43) Date of publication of application: **08.11.2023**
(21) Application number: 22171938.8
(22) Date of filing: 05.05.2022
(51) Int. Cl.: G06F 3/03, G02F 1/01, G06F 3/0354, G06F 3/04883, G09F 9/37, G02B 5/23, G02F 1/167, G02F 1/1673, G09G 3/34, G09G 3/20

(54) **A FULL-COLOR, WRITABLE-ERASABLE DISPLAY SYSTEM**

(71) Applicant: Freshape SA, 1690 Villaz-St-Pierre (CH)
(72) Inventor: KUNG, Yen-Cheng, 1110 Morges (CH); LIU, Yuhang, 1024 Ecublens (CH)
(74) Representative: Schneiter, Sorin

(57) **Abstract**

The present invention concerns a full-color, writable-erasable display system. The system comprises a display medium and a writing device. The display medium comprises a first layer comprising a responsive material and a second layer comprising a plurality of color filters. The writing device comprises a inducer entity and one or more sensors. In a preferred embodiment, the writing device comprises a data processing system suitable configured to determine, from the signal produced by at least one of said one or more sensor, the position of the writing device or the inducer entity with respect on the display medium and/or to detect the type of the color filter that is in vicinity of the inducer entity.

## Description

### Technical Field

The invention generally relates to the field of electronic paper. The invention relates more particularly to a writable-erasable display medium, to a writing device for a writable-erasable medium, and to a full-color, writable and erasable display system.

### Background Art

Writable and erasable media are substrates on which a user generates a visual representation (graphical or textual information) generally with the aid of a writing tool, whereby the visual representation can be erased and a new visual representation can be generated. The blackboard can be seen as an original form of a writable-erasable medium, wherein the writing tool is a piece of chalk, and the medium is erased by cleaning the blackboard by aid of a suitable cleaning solvent such as water.

There are simple writable and erasable media that avoid the disadvantages of a writing tool that, as chalk, is worn off with time and needs to be replaced, and of needing a solvent for erasing the medium. A well-known erasable medium allowing a user to write down or draw information on the medium is the Magna Doodle display, which comprises a substrate filled with a thick, opaque white liquid containing tiny dark magnetic particles. The writing device in this case is a magnet-tipped stylus. This magnet produces a magnetic field, which, with the magnet tip getting close enough to the writing surface of the display, exerts a force on the dark particles, which are drawn to the drawing surface and thereby generate a visual effect. For erasure, the particles are removed from the drawing surface, again by a magnet, this time in the form of an erasing bar sliding at the back of the medium. In summary, the writing tool directs energy into the display, acting on magnetic image elements, which generate a visual effect by changing their position or orientation in the medium.

The Magna Doodle display is generally used as a toy and cannot be used for displaying digitally stored information. Furthermore, it is an objective of the invention to provide a system suitable to display colored visual representation, more preferably a full-color visual representation.

Commonly used LCD (liquid crystal display), OLED (organic light emitting diode display) display are the displays which could serve the function of being erasable and also for presenting digitally stored information. Such prior art displays have the disadvantages of emitting light and thereby being tiring to the human eye, high energy consumption, and not being adapted to the varying environmental light, for example in outdoor conditions. It is an objective of the invention to provide a reflective writable-erasable screen, in which the image is not produced by light emission, such as light-emitting pixels, but by the reflection of environmental light on or in the screen. Watching a reflective display corresponds more to watching a printed medium than using a luminosity-based screen. Reflective screens do not exhibit the disadvantages mentioned above and may thus be considered particularly advantageous for outdoor screens (higher contrast under direct solar irradiation) and for screen-based reading (less tiring to the human eye). Reflective displays are sometimes also referred to as electronic paper, e-paper or electronic ink-displays.

It is an objective of the invention to provide a writable-erasable, reflective display, e-paper or electronic ink-display, which could display full color images and digital contents, providing wider scope of application.

JP4650955B2 discloses a magnetophoretic reversal display panel. This device uses dispersion media comprising different colors and micromagnets having different magnetic poles for providing a display with three color choices, white, black and red.

CN108761849B discloses a magneto-chromic display. This device uses an active-matrix backplane to generate localized magnetic field and further changes the colors of magneto-chromic materials on the front plane.

CN2326449Y discloses a colour magnetic writing board, in which a colored suspension emulsion and colored iron sand is housed in a cavity in the board. Thanks to different colored iron sand, this writing board could present different colors. However, the colors are regional limited. Every specific region could show only one variation of colors.

US6147791A discloses rotating elements and magnetic latching for providing a writable-erasable Gyricon display. The way they achieve different colors on display is to use rotatable spheres with different colors on different faces. Multiple colors could be achieved with this manner but the total amount of colors is still limited.

US 2020/0147978 A1 discloses a multi-color electronic paper in which the display medium comprises microcapsules including black and white particles of opposed charges, and the writing module comprises an electrode that is in contact with the surface or dragged on the surface for erasing a visual representation by removing negatively charged ions attached to the surface of the e-paper. On the other hand, the writing head ejects electrons onto the surface of the e-paper. In view of this disclosure, it is an objective of the invention to provide a writable-erasable, reflective display (e-paper), which does not require the deposition of charged particles on the display, which does not require wiring or grounding of the display, and which does not require electrodes for operating and/or displaying a visual representation.

It is an objective of the invention to provide a full-color, reflective display.

It is an objective of the invention to provide a passive full-color display that can be used freestanding and/or hand-holdable, in absence of backplane driving circuit and which can be operated wirelessly if need be. It is also an objective to provide a display that can be written by a hand-holdable writing tool, or more generally a writing tool or head that does not require stabilized guiding with respect to the erasable medium, and which does not necessarily require a wired connection to the power grid, or other wiring.

The present invention addresses the objectives depicted above. Further objectives and problems addressed by the present invention will become apparent from the description of the aspects and embodiments of the invention herein below.

### Summary of the Invention

Remarkably, the inventors provide a full-color, writable-erasable display and a writing device suitable to generate a visual representation on the display. The inventors also provide a system comprising the display medium and the writing device.

In an aspect, the invention provides a writable-erasable display medium comprising: a first layer comprising a responsive material that is responsive to light and/or to a magnetic force, and, a second layer comprising a plurality of color filters; wherein the position, orientation, configuration and/or chemical state of said responsive material affects the first layer's property to absorb and/or reflect light.

In an aspect, the invention provides a writing device comprising one or more inducer entity comprising a writing head suitable to affect the position, orientation, configuration and/or chemical state of said responsive material, one or more sensor capable of sensing light and a data processing entity.

In an aspect, the invention provides a full-color, writable-erasable display system, comprising: a writable-erasable display medium; and, a writing device suitable for generating a full-color visual representation on the writable-erasable medium; wherein said display medium comprises a first layer comprising a responsive material, wherein said responsive material is responsive to light and/or to a magnetic force, and a second layer comprising a plurality of color filters; wherein the position, configuration, orientation and/or chemical state of said responsive material affects a property of the first layer to absorb and/or reflect light; wherein said writing device comprises: one or more inducer entity suitable to affect the position, configuration, orientation and/or chemical state of said responsive material; one or more sensor capable of sensing light and a data processing entity configured to determine, from the signal produced by at least one of said one or more sensor, one or both selected from: (1) information related to the position of the writing device and/or the inducer entity with respect to the display medium, in particular information related to a location of said responsive material that is in operational reach of the inducer entity, and, (2) a type of a color filter that is in vicinity of the inducer entity of the writing device.

In an embodiment, said inducer entity comprises one or both of the following: a permanent magnet and/or electromagnet suitable to exert a magnetic force on said responsive material, said responsive material comprising a ferromagnetic and/or ferrimagnetic material; and, a source of light emitting light having a wavelength suitable to induce a change in the photoisomeric configuration and/or chemical state of said responsive material, said responsive material comprising a photochromic material.

An advantage of the present invention is to reduce the high cost and manufacturing complexity of active-matrix driven display while providing a writable/erasable full-color displaying experience.

Further aspects and preferred embodiments of the invention are defined herein below and in the appended claims. Further features and advantages of the invention will become apparent to the skilled person from the description of the preferred embodiments given below.

### Brief Description of the Drawings

**Figure 1** is a cross-sectional schematic view of the writable-erasable medium in accordance with an embodiment of the invention.
**Figure 2A** is a cross-sectional schematic view of the writable-erasable medium shown in Fig. 1, in which a particular color is displayed.
**Figure 2B** is a cross-sectional schematic view of the writable-erasable medium according to another embodiment, which comprises a photochromic material.
**Figure 2C** is a cross-sectional schematic view as shown in Fig. 2A, in which the display medium further comprises a marker layer.
**Figure 3** is a schematic top-down view to a writable-erasable medium according to an embodiment of the invention, the medium comprising a marker layer.
**Figure 4** is a schematic top-down view to a writable-erasable medium according to another embodiment of the invention.
**Figures 5A-5B** show exemplary writing devices in accordance with various embodiments of the invention.
**Figure 6** shows an exemplary writing device comprising a plurality of inducer entities in accordance with another embodiment of the invention.

Hereinafter, preferred embodiments of the device of the invention are described, in order to illustrate the invention, without any intention to limit the scope of the present invention.

### Detailed Description of the Preferred Embodiments

The present invention relates to a writing device for a writable-erasable medium and to the medium that can be written by way of the writing device.

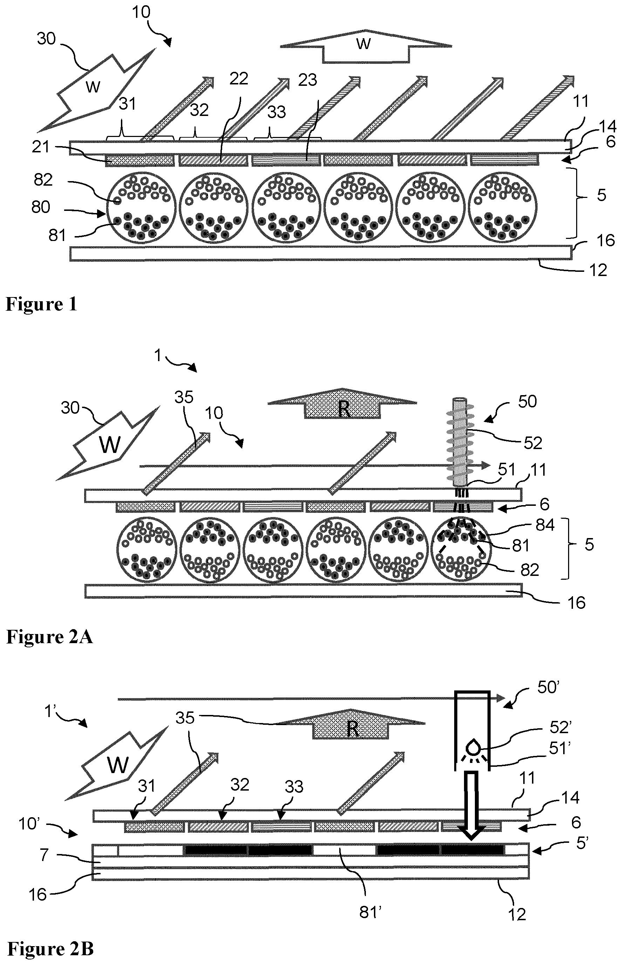

**Figure 1** shows a display system 1 comprising a writable-erasable display medium 10 according to an embodiment. The medium 10 preferably comprises first and second opposed surfaces 11, 12, of which at least one surface is a viewing surface 11, on which a visual representation is created by the medium. The viewing surface is preferably provided by a transparent front substrate 14, whereas the back side of the medium is preferably closed by a back substrate 16, which is generally not transparent. Accordingly, in some embodiments, the back surface 12 is preferably not a viewing surface for displaying visual representations and preferably is the outer surface of the back cover.

The medium 10 preferably comprises a plurality of layers, at least some of which are preferably provided between the opposed substrates.

The medium 10 preferably comprises first and second layers 5, 6. The first layer preferably comprises a responsive material 81, 82, and the second layer preferably comprises a plurality of color filters 21-23. Preferably, the second layer 6 is provided between the transparent front substrate 14 and the first layer 5.

In a preferred embodiment, the second layer 6 is provided closer to the viewing surface 11 than said first layer 5. In other words, the second layer 6 is preferably between the viewing surface 6 and the first layer 5. Preferably, the first layer is provided below the second layer, with the term "below" referring to the orientation of the medium as shown in Fig. 1, where the viewing surface 11 is shown on top.

In an embodiment, both, said first and second layer 5, 6 are provided below the transparent front substrate 14 and/or below the viewing surface 11 of the medium 10.

In a preferred embodiment, the responsive material is a material that is responsive to one or both selected from a magnetic force and light. The responsive material is preferably a material that is provided to change, when exposed to a determined amount of magnetic force and/or to a determined intensity and/or wavelength of light, one or more selected from the group consisting of: the position, the orientation, the configuration and/or the chemical state. Under the effect of an inducer entity, the responsive material may change one, two or more of the above characteristics. For example, under a magnetic force, the magnetically responsive element may change the position *and* the orientation, or the responsive material may change just one of these two. The term "configuration" also includes "chemical configuration", and the latter may also include "chemical state". The term "chemical state" may include one or more selected from oxidation state, charge, absorption and/or spectroscopic characteristics, photoisomeric state, for example.

In accordance with an embodiment, said position, orientation, configuration and/or chemical state of said responsive material determines if said first layer absorbs visible light or reflects visible light.

In a preferred embodiment, said responsive material 81 is a magnetically responsive material.

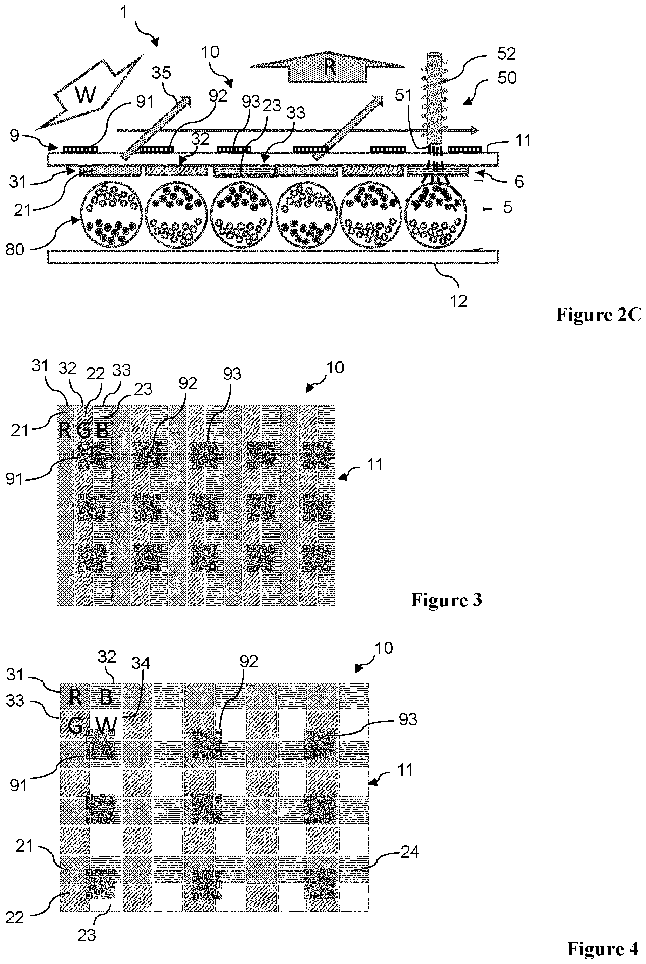

In a preferred embodiment, as illustrated in Figs 1, 2A and 2C, said magnetically responsive material comprises a ferromagnetic and/or ferrimagnetic component, for example ferromagnetic and/or ferrimagnetic particles 81.

In the embodiment shown, said ferromagnetic and/or ferrimagnetic component 81 is provided in closed compartments 80 in said first layer 5. In Figure 1, the compartments 80 are provided in the form of microparticles. Of course, compartments having other forms are also encompassed by the invention. In some embodiments, compartments 80 may also be absent. For example, in case of light responsive, photochromic materials (Fig. 2B), compartments may not be necessary. For example, photochromic materials may be deposited and therefore immobilized, such that compartments are not necessary. Side-by-side disposed, adjacent compartments 80 are generally preferred when the first layer 5 comprises a movable material, for example movable magnetically responsive particles, as shown in Figs 1, 2A and 2C.

In an embodiment, said component 81 is provided movably within said first layer or, if applicable, within said compartments.

Preferably, the first layer and/or said compartments 80 comprise at least two, first and second components, a black or dark component 81 and a white, bright or clear component 82.

In Figs 1, 2A and 2C, the first component is provided in the form of dark or black responsive particles 81, shown, in Fig. 1, on the bottom of the compartments 80.

The second component 82 may be provided in the form of a matrix, suspension or particles, which in Fig. 1 are shown to cover said dark responsive particles. The dark responsive particles preferably absorb light, and in particular visible light, most preferably at least the entire spectrum of visible light.

In Figure 1, the second component 82 is provided above the first component, that is, between the viewing surface 11 and the first component 81. Therefore, as external light 30 impinges on the viewing surface, the light will be reflected by the white, clear second component 82, such that the viewing surface will appear white and/or clear and will not display any visual representation.

In an embodiment, the first layer 5 comprises one or more particles 81, 82 that are provided movably within said compartment, wherein the position and/or orientation of said particles within said compartment 80 influence a property of said compartment to absorb and/or reflect light, wherein said particles are magnetically responsive.

In an embodiment, the first layer 5 comprises compartments and/or regions 80, each compartment and/or region comprising two kinds of particles, a first kind of particles that are white or comparatively clearer, and a second kind of particles that are black or comparatively darker, wherein one or both of said types of particles are magnetically responsive.

In a preferred embodiment, the display medium 10 comprises a second layer and/or filter layer 6. The second layer preferably comprises a plurality of color filters 21-23. In Figs 1-3, three different types of color filters 21-23 are shown.

In a preferred embodiment, the color filters are provided in areas. Preferably, the areas are spatially defined and/or limited areas, wherein one type of color filter, or optionally, in some cases, no color filter, is provided in one of said spatially limited areas.

In a preferred embodiment, the color filters are provided in areas 31-33, said areas being one or more selected from: (i) adjacently distributed over said viewing surface, (ii) separate and/or separated areas, (iii) areas having the same contour and/or surface.

Preferably, said areas 31-33, 31-34 are provided side by side. Preferably, said areas comprising different color filters have the same vertical position within the device, wherein "vertical position" refers to the position along a direction perpendicular to the viewing surface 11 and/or to the front substrate 14 of the display medium 10.

Preferably, said areas 31-33 or 31-34 are provided in the form of a continuous or discontinuous layer comprising different areas.

The areas comprising color filters are better visible in the embodiments shown in Figures 3 and 4. In Fig. 3, the individual areas are shown to have rectangular outline, whereas in Fig. 4 the areas are quadratic. The invention is not limited to any particular outline of the areas 31-34, and encompasses, for example, any polygonal, such as quadrilateral, hexagonal or pentagonal, for example, outline, or rounded outlines, such as circular or elliptical outlines, and combinations of different outlines and/or surfaces. Preferably, a group of areas comprising different types of color filters within each group form a functional unit, for example a pixel with the areas/color filters forming sub-pixels. Preferably, the areas are sufficiently small so as to be able to provide a color by additive color mixing. Each area of a group comprises one or more color filter, or optionally, no color filter, so as to be able to exhibit a particular color that may be used for additive color mixing.

In an embodiment, an area 31 comprising a type of color filter 21 provides a sub-pixel, and n areas 31-34 comprising n different types of color filters 21-23, including optionally one area 34 lacking a color filter, form a pixel of said display medium.

In an embodiment, a plurality of areas 31 comprising a particular type of a color filter 21 are aligned so as to form a periodic 2D array arrangement comprising said particular type of color filter, said periodic 2D array arrangement extending over several compartments of said viewing surface. In an embodiment, areas comprising one particular type of color filters are aligned along a line on said display medium, in particular when viewed in the top-down view as shown in Figs 3 and 4.

In a preferred embodiment, said plurality of color filters 21-23 comprises first, second, third and optionally more different types of color filters 21-23, wherein three or more different types of color filters are provided on said second layer 6 so as to enable a color display by additive color mixing.

In a preferred embodiment, a first type of color filter is transmissive to light of a first color mainly, a second type of color filter is transmissive to light of a second color mainly, and a third color filter is transmissive to light of a third color mainly, wherein said first, second and third colors enable color display by additive color mixing. In an embodiment, the first, second and third color filters are to a large extent, for example essentially exclusively or only, transmissive to said first, second and third colors, respectively. The filtering is preferably such that only one color becomes effectively relevant for additive color generation, generally because the color filter is transmissive to that color to the extent required for perception of the color. Of course, said filter may not be absolutely non-transmissive to other colors, but preferably they can pass through the color filter to a much lesser extent. It is also noted that a particular color of a color filter may be formed by light of different wavelengths or wavelength ranges.

For example, in Fig. 3 a first area 31 comprises a type of color filter 21 that filters all visible light but red light. The letter R indicates that this color filter or the filters appear red when visible light passes through an area comprising this color filter type.

A second area 32 may comprise a type of color filter 22 that filters all visible light but green light. The letter G in Figs 3 and 4 indicates that areas comprising this type of color filter appear green when visible light passes through the area comprising these filters.

A third area 33 comprises a type of color filter 23 that filters all visible light but blue light. The letter B indicates that this area appears blue when visible light (of blue color) passes through the areas comprising these filters.

In order to be able to achieve the appropriate color filtering, one type of color filter may comprise one or several light absorbing substances, for example a composition of different color filtering dyes, thereby ensuring that one particular color is not absorbed by the particular type of color filters. In some embodiments, one type of color filter comprises a particular mixture or composition of different color filtering substances, such that the corresponding color filter type is transmissive to light having a defined wavelength or wavelength range.

Generally, only one type of color filter 21-23 is used in one area, e.g. a first type of color filters (or filters) is used in said first area, a second type of color filters in second areas, and so forth.

Together, the areas 31-33 in Fig. 3 allow for RGB color display. Different areas comprising different color filters may thus be said to form a pixel together, which may display any color obtainable by RGB color mixing, depending on light passing through the corresponding filter or not.

Turning back to Fig. 1, one can understand that with the first layer 5 reflecting all incoming visible light W, the display medium will show a white or cleared viewing surface 11 to the observer, as the color filters 21-23 and/or areas 31-33 will let through red, green and blue light, so as to exhibit white light altogether, said white light being obtained by RGB color mixing that is mediated by said color filters.

In a more general, preferred embodiment, said second layer 6 comprises a plurality of different areas 31-33, wherein one area comprises one of said first, second, third and optionally more types of color filters 21-23, wherein a group of n areas comprises n different types of color filters and wherein said group of n areas is provided to enable color generation by additive color mixing. The letter n may be two or larger, preferably 3 or larger, for example 4 or larger. In a preferred embodiment n is 3 or 4. Preferably, when n is four or larger than four, at least one of said n areas lacks a color filter.

In a preferred embodiment, said areas are provided in groups, each group comprising n areas, wherein a group of n areas provides a pixel and each of said n areas provides a sub-pixel of said pixel, wherein said subpixels are configured to exhibit a particular color of said additive color mixing, for example, red, green, blue or optionally white color, respectively. For example, said subpixels are configured to exhibit, for example, red, green, blue or optionally white color, respectively.

Some areas and/or sub-pixels in the second layer 6 may lack a color filter. For example, one area 34 of a group of areas may lack a color filter, as shown in Fig. 4. In an embodiment, a pixel may comprise an area forming a sub-pixel that lacks a color filter. This area will thus let through all visible light and generally exhibit white light, as the first layer 5 is reflecting incoming light as shown in Fig. 1.

In Fig. 4, four areas 31-34 together are shown to provide additive color mixing, which here is shown to be RGBW color mixing. Four areas 31-34 may be said to form a pixel. The areas 31-34 (or 31-33 in Fig. 3) cover the entire visible surface 11 of the display medium, and are thus provided in a repetitive manner, one group of areas (or one pixel) next to the other group of areas (or pixel). The number of groups of areas preferably depends on the display size and resolution, and the invention is not limited to a particular number of pixels/groups of separate areas.

In a preferred embodiment, said second layer 6 comprises a plurality of different areas 31-34 provided to contribute to the generation of a color by RGBW color mixing, wherein a first area 31 comprises said first type of color filter 21, a second area 32 comprises said second type of color filter 22, a third area 33 comprises said third type of color filter (23), and wherein a fourth area 34 lacks a color filter and is transparent to all light in the visible spectrum.

The display of a visual representation, such as text and/or images, by the display medium 10 is illustrated in Fig. 2A.

Preferably, the system 1 of the invention comprises a writing device 50. The writing device preferably comprises an inducer entity 52, which is configured to influence the responsive material 81 in the first layer. In a preferred embodiment, the inducer entity 52 is part of and/or integrated in a writing head 51 of the writing device 50.

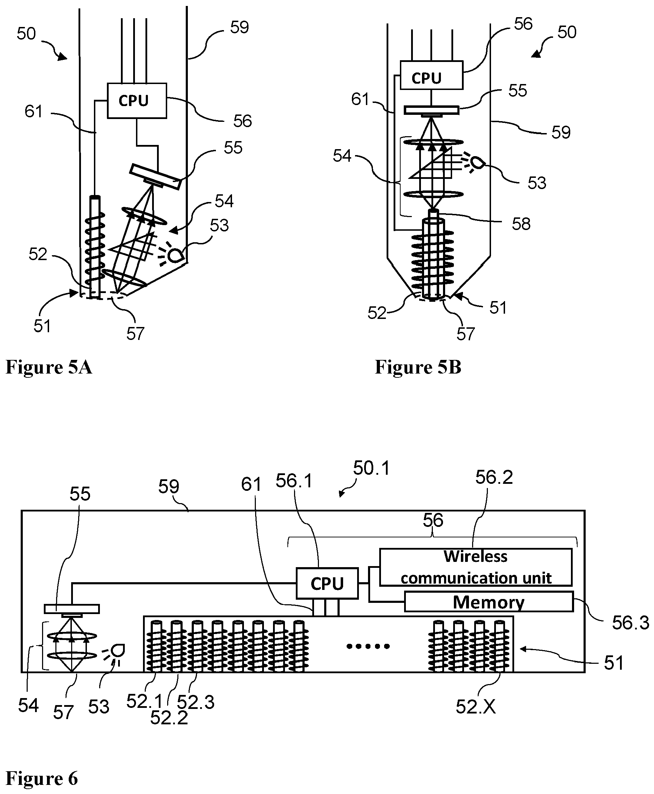

Exemplary writing devices are shown in **Figures 5A** and **5B****.** In these embodiments, the writing device comprises a casing 59, with a defined location 57 at the bottom, which may be defined as an opening. The inducer entity 52 is preferably positioned in a particular way at the area or opening 57. The opening also allows for light to get into the device and to be guided by or through an optical system 54, which may comprise lenses, mirrors, and the like, for directing the light from the bottom 57 towards the sensor 55. The writing device preferably comprises a data processing entity 56, here shown to be a CPU, for controlling and driving the activity of the inducer entity. Furthermore, the writing device preferably comprises a source of appropriate light 53, which in some embodiments may be a source of IR light, but in other embodiments may be a different type of light. Fig. 5B shows a particular embodiment in that the optical system 54 also comprises a light guide 58, which passes here centrally through the longitudinal electromagnet which forms the inducer entity 52.

It is noted here that the writing device 50 in Figs 5A and 5B are shown to comprise one inducer entity. It is noted that the writing device may comprise a plurality of inducer entities (Fig. 6), said plurality being preferably controlled by said data processing entity.

In a preferred embodiment, the inducer entity 52 is suitable to affect the position, configuration, orientation and/or chemical state of said responsive material. Preferably, one may say that the inducer entity and the responsive material form a combination or functional unit, that is selected so as to achieve display of a visual representation on the viewing surface.

Accordingly, the nature of the inducer entity 52 preferably depends on and/or is adapted to the nature of the responsive element 81 in the first layer 5 of the display medium. In the embodiment shown in Figs 1, 2A and 2C, the responsive element is a magnetically responsive element, which here comprises black ferromagnetic and/or ferrimagnetic particles.

In these embodiments, the inducer entity 52 comprises a permanent magnet or electromagnet, suitable to exert a magnetic force on said particles 81. For example, in embodiments where the inducer entity comprises one or more electromagnet, the electromagnet may be switched on and/or off at the appropriate moment when the writing device sweeps over the display medium, in particular over the viewing surface of the display medium.

In other embodiments, the inducer entity may comprise one or more permanent magnet. In order to control the appropriate magnetic force required to act on the responsive material, the permanent magnet is preferably displaced inside the writing device 50, so as to be brought closer to the responsive layer, in particular to be brought in operational reach of a location, for example a spot 84 below a sub-pixel or pixel, of the responsive layer. In such embodiments, the writing device preferably comprises a motor configured for acting on the inducer entity 52. For example, the motor may be configured to bring the magnet closer to the area 57 of the writing device, which is the area that is provided to be closest to or directly in contact with the viewing surface of the display medium. For bringing the magnet back to a non-activated position, an elastic element, for example a spring may be provided, or the motor (or another motor) may be configured to move the permanent magnet back to a non-writing (or non-inducing) position.

In a preferred embodiment, said inducer entity 52 is activated in order to act on said responsive material in a region 84 that is in vicinity of the inducer entity 52 and/or the writing head 51 of the writing device 50.

The writing device is preferably configured to control the inducer entity's activating effect on the responsive material at a particular point or region of the display medium. As seen in Fig. 2A, as the writing device 50 is passed over the viewing surface 11, the inducer entity is activated in a controlled manner so as to act upon the responsive component 81 at predetermined or determined positions, generally directly below the viewing surface 11. The horizontal arrow in Figs 2A-2C illustrates the relative movement between the writing device 50 (or 50') and the display medium 10.

In Fig. 2A, the writing device 50 is shown to act upon magnetically responsive particles that are directly below areas of color filters 32, 33 that filter light except green and except blue light, respectively. Below the areas 32, 33, impinging light 30 will be absorbed by the dark particles 81, so that no light is reflected in these areas, and thus no light will be emitted by the viewing surface 11 above these areas 32, 33. On the other hand, the inducer entity 52 of the writing device 50, when passing over the viewing surface 11 shown in Fig. 2A, was switched off, or inactivated, when passing over the areas 31 filtering all light but red light. Below these areas, the first layer continues reflecting all light, and thus the red light that has reached the first layer 5, as the responsive element did not change the overall reflection of light below these areas 31. The filters in the type of color filters 21 in areas 31 filter all light except red light, such that in case of Fig. 2A, either a red image or an overall red display surface is displayed when seen from above. The reflection of red light from the viewing surface is illustrated by the arrow 35 showing red light being reflected by the display medium 10.

In an embodiment, said responsive material 81' is responsive to light. For example, the responsive material 81' is or comprises a photochromic material.

In an embodiment, a photoisomeric configuration or chemical state and/or configuration of said photochromic material affects the first layer's property to absorb and/or reflect light.

Figure 2B shows an embodiment similar to the one of Fig. 2A, but with the responsive material being a photochromic material 81'.

As with the previous embodiments, the first layer 5' comprises the responsive material 81', which here is responsive to electromagnetic radiation. Photochromic materials are materials that change color upon exposure to light. Preferably, the color change is reversible. The material in the responsive layer is preferably a material that exhibits the property of photochromism and/or photoisomerization. In order to be effective, a determined light intensity and/or wavelength is preferably directed to the photochromic material.

The display medium 10' is thus preferably light-driven. The inducer entity of the writing device 50' preferably comprises a light source 52', preferably comprised in the writing head 51' of the writing device 50'.

In the display medium 10' shown in Fig. 2B, a light reflecting layer 7 is provided below the responsive layer 5'. The light reflective layer may be considered as part of said first layer 5'.In this case, the responsive material and the visible light reflective components are separated in two sub-layers, whereas in the embodiment shown in Figs 1, 2A and 2C, the responsive and visible light reflective components are integrated in a single layer.

The layer 7 preferably reflects at least all light of the visible spectrum, and thus appears white. The layer 7 preferably provides the white, clear and or bright background if no visual representation is shown on the medium 10. It is noted that on the viewing surface, the white background is created by additive color mixing achieved by the filter layer, as described above.

The responsive layer 5' comprising the photochromic material is preferably provided between said white reflective layer 7 and said second layer 6 comprising a plurality of color filters 21-23. The second layer may be realized as discussed with respect to the embodiment shown in Figs 1 and 2A.

For the writing device 50', there exist several possibilities: either the light used for acting on the photochromic material is suitable to pass through all types of color filters. For example, the light source 51' may emit infrared (IR) light or ultraviolet (UV) light. In another embodiment, the writing device 50' emits the whole spectrum of the visible light, so that light of at least one wavelength range will be able to pass through the respective color filter. In yet another embodiment, the writing device 50' is configured to emit specifically the visible light having the wavelength that passes through the corresponding type of color filter, and area comprising the type of color filter, respectively. For example, for acting on the photochromic material that is below the area 32 that filters all light but green light, the writing device 50' may be configured to emit green light.

The layer of photochromic materials is preferably selected to have a light intensity threshold for color change. In this manner, it is preferably assured that the color change of the photochromic layer is not triggered by ambient light, the latter having an intensity lower than the intensity required for inducing the color change.

In the embodiment shown in Fig. 2B, the photochromic material has at least two chemical states and/or configurations. The expression "photoisomeric configuration" is also used in this specification to refer to the at least two (different) color states that the photochromic material in layer 5' can assume. When irradiated with the appropriate light, the photochromic material of the embodiment shown turns dark. In Fig. 2B, this is the case with the photochromic material situated below the areas 32, 33 that are transmissive to green and blue light only, respectively. When not irradiated, the photochromic material is transparent, which, in Fig. 2B, is the case with the photochromic material situated below the areas 31, which is transmissive to red light only.

As with the embodiment shown in Fig. 2A, the display medium 10' in Fig. 2B displays a red overall display surface or a red image, due to red light being reflected at layer 7 following filtering of impinging white light by the filters or filter type 21 in area 31. The photochromic material below areas 31 is in the transparent state and does not affect the reflection of light.

On the other hand, no light is reflected below areas 32 and 33, since the photochromic material below these areas is in the dark chemical state thus that no light can be reflected.

The photochromic material may be selected from various types of materials, including organic, inorganic, and organometallic materials, as well as combinations of the aforementioned. In an embodiment, said photochromic material comprises one or more selected from chemical molecules, polymers, minerals, ceramic compounds and composite materials, for example.

For the purpose of clarity, it is noted that possible transparent, black and/or white states of said photochromic material are also considered as "color states" for the purpose of the present specification.

Furthermore, it is noted that a visible light reflecting layer 7 may also be absent, for example in cases where the photochromic material comprises a color state which is white or which corresponds to the color that is transmitted through the corresponding filter type. The invention encompasses various possible combinations of using one or more different photochromic materials and combining the same with the properties of the second or filter layer 6, so as to obtain a full-color display.

The above description of particular embodiments as shown in Figs 1, Fig. 2A and 2B, demonstrate how a full-color display of visual representations can be achieved in accordance with the present invention.

The present invention encompasses different manners of operating the writing device 50 and different concepts for the writing device.

In a preferred embodiment, the writing device comprises one or more sensor 55 capable of sensing light and a data processing entity 56 configured to determine, from the signal produced by at least one of said one or more sensor, one or both selected from: (1) a position of the writing device and/or the inducer entity 52 with respect to the display medium 10, in particular a position on the viewing surface 11 of the display medium, and, (2) a type of a color filter that is in vicinity of the inducer entity 52 of the writing device 50.

In one embodiment, the writing device 50, or the entire system 1, is configured to determine the position of the writing device on the display medium, preferably on the viewing surface 11 of the display medium 10.

In an embodiment, the writing device 50, or the entire system 1, is configured to determine the position of the inducer entity 52 on the display medium, preferably on the viewing surface 11 of the display medium

In accordance with the above embodiments, the writing device 50 is configured to determine a position that allows the writing device to generate a visual representation, by controlling the inducer entity acting upon the responsive layer. The writing device is preferably configured to determine which location and/or spot of the responsive layer 5 is in operative reach of the inducer entity, such that the inducer entity can preferably generate the appropriate response of the responsive layer at that position or location. This step of writing preferably corresponds to the timely switching on and off of the inducer entity as the writing device passes is passed over the display medium or the display medium is moved relative to the writing device, respectively. The writing device 50 preferably runs software and/or firmware suitable to act upon the responsive layer depending on position information related to the writing device so as to produce a visual representation.

In an embodiment, the display medium comprises markers 91-93 and/or a marker layer 9. Preferably, the marker layer 9 comprises one or more markers, preferably a plurality of markers 91-93.

The marker layer is preferably provided above said first layer 5 and preferably above said second layer 6. Preferably, the marker layer is provided closer to the viewing surface 11 than said first and second layers 5, 6. In an embodiment, the markers and/or the marker layer is provided on top or below the substrate 14 providing the viewing surface 11 of the display medium 10.

In the embodiment shown in **Figure 2C****,** the marker layer 9 is on top of the front substrate 14.

In a preferred embodiment, the display medium 10 further comprises a marker layer 9, said marker layer comprising markers 91-93 comprising a material that is transparent to visible light and which absorbs IR light. In some embodiments, the marker layer reflects IR light but is transparent to visible light.

In a preferred embodiment, the display medium 10 preferably reflects at least part of IR light. For example, one or more selected from the viewing surface 11, the front substrate 14 and/or the marker layer 9 comprise a material that reflects at least some IR light.

As has been mentioned above, the writing device preferably comprises one or more sensors 55. Preferably, said sensor is capable of sensing IR light, for example only IR light.

Preferably, said one or more sensor comprise an IR sensor configured to produce a signal depending on IR light reflected by said display medium. Preferably, IR light is reflected from the display medium and in particular from the viewing surface 11 or substrate 14 comprising the markers. Due to the markers, a signal is generated in the sensor, which is dependent on the particular marker.

In some embodiments, the IR light that is sensed by the writing device, in particular by sensor 55, is contained in the environmental light that is reflected on the viewing surface including the markers. In some embodiments, the writing device comprises a light source 53 that is in particular suitable to emit IR light. Preferably, the light emitted by the light source 53 exits the writing device through an opening or transparent area 57. In the embodiment shown, the opening 57 is in vicinity of the writing head 51 and/or of an operational part of the inducer entity 51.

It is noted here that in case of light driven display mediums comprising preferably photochromic materials, the writing device preferably comprises one or more light sources as required for producing the reflected light related to the markers and for determining the positional information, and the light source for acting on the responsive layer 5. In Figs 5A and 5B, the inducer entity 52 is schematically shown in the form of electromagnets, but they could be provided in the form of displaceable magnets and/or light sources, depending on the embodiment. For example, the writing device 50 may comprise two light sources: a first light source 53 emitting IR light and a second light source emitting light for activating the photochromic material in the responsive layer.

In an embodiment, said marker layer comprises a plurality of markers 91-93 distributed over the viewing surface 11 of the medium, wherein each marker of said plurality of markers comprises a 2D representation that is unique amongst the 2D representations of said plurality of markers.

In an embodiment, said data processing entity 56 is configured to determine, on the basis of a signal produced by said sensor 55, if a location of the responsive layer 5 is in operational reach of the inducer entity 52, and to activate or not the inducer entity 52 so as to induce or not a response in that location in dependence of a visual representation to be generated by said writing device 50. Preferably, said location corresponds to a spot, region or compartment 84 that is below a particular area, sub-pixel and/or pixel, for example vertically below, when the device is shown as in Fig. 1.

For the purpose of the present specification, the terms "activate", "activating", "activation", and various grammatical forms thereof, are used to specify that the inducer entity is put in a condition where it can act upon the first layer in order to induce a response of said responsive material, wherein said response contributes to the generation of a visual representation of the display medium. For example, where the inducer entity is an electromagnet, the activation of the same results in switching on the electromagnet so as to produce a magnetic force that is suitable to change the position, orientation and/or configuration of the magnetically responsive particles in the responsive layer. In cases where the inducer entity is a source of light and the first layer comprises a photochromic material, the term "activate" refers to the switching on the light source such that the same can induce a color change of the photochromic material. The terms "switch on and/or off" are generally used as equivalents to "activate/inactivate" in this specification. When "activated" the inducer entity is generally in the writing mode, so as to generate said visual representation.

For the purpose of the present specification, the expressions "operational reach" and "operative reach" refers to a relative position between the writing device 50, more particularly the inducer entity 52 thereof, with respect to a particular location or spot 84 of the responsive layer, which relative position is such that, if the inducer entity is activated when in "operational reach", it induces the change of the position, orientation, configuration and/or chemical state of the responsive material at that location 84. One may thus envisage that the inducer entity be activated without being in operational reach of the responsive layer. In this case, the activation would not contribute to the generation and/or modification of a visual representation shown by the display medium 10.

For example, in Fig. 2A, the inducer entity 52 is shown to be in "operational reach" of the ferrimagnetic and/or ferromagnetic particles 81 at location 84, which location corresponds here to a compartment of the responsive layer comprising said particles. As shown by the dotted lines emanating from the inducer entity, the latter is activated such that, due to the activation, the particles 81 have changed their position by moving in direction towards the viewing surface 11, across the white particles (or matrix) 82.

In an embodiment, the data processing entity 56 of the writing device is configured to determine information related to the position of the writing device and/or inducer entity with respect to the display medium 10 on the basis of a signal produced by said one or more sensor sensing said markers.

In an embodiment, said data processing entity 56 is configured to determine information related the position of the inducer entity 52 on the viewing surface 11 of the display medium 10.

The expressions "information related to the position", "positional information", and "position", for example of the inducer entity and/or the writing head with respect to the display medium, are intended to mean that that the data processing entity 56 is configured to determine whether or not and/or at what moment the inducer entity needs to be activated and when it needs to be switched off (or inactivated) in order to generate a particular visual representation while said writing device 50 is moved relative to the display medium with the purpose of generating said visual representation. In other words, said expressions mean that the data processing entity 56 is configured to determine which location and/or spot of the responsive layer is in operational reach of the inducer entity at a particular moment.

It is noted here that the writing device does generally not need to (but could) provide coordinates of its position, but preferably needs to activate and/or inactivate the inducer entity in a timely and spatially coordinated manner so as to allow the generation of a visual representation. In order to be able to do so, the writing device preferably runs computer codes that switch on and off the inducer entity depending on signals produced by said sensor 55.

Preferably, the writing device determines the information related to its position and activates/inactivates the inducer entities in real time and/or instantly. In other words, the reading of signals produced by the sensor and the generation of a visual representation by the writing device takes preferably place simultaneously.

In Figures 3 and 4, the markers 91-93 are 2D representations realized in the form of QR codes. In some embodiments, each marker individual marker/QR code is different from any other marker on the display medium. Each marker of said plurality of markers may thus be a unique marker, preferably producing a unique signal when read by the sensor 55. In accordance with this embodiment, the data processing entity 56 of the writing device may be configured to determine the positional information on the basis of reading one single marker, for example. In a preferred embodiment, the markers do not comprise an axis of symmetry when considered in a top-down view and/or as a 2D representation.

The data processing entity may, based on the signal of the sensor, not only "recognize" a particular, unique marker but may also deduce the orientation and/or distance of the writing device with respect to the marker, for example. Preferably, the writing device runs computer code that may accomplish this task.

In other embodiments, two or more different markers may be required for the writing device to be able to determine said positional information.

In general, the display system and in particular the writing device 50 may be configured to generate a visual representation that has previously been electronically stored. For example, the writing device may comprise a memory (not shown in Figs 5A and 5B), which may be used by the writing device and in particular the data processing entity 56 when generating the visual representation. The writing device may also comprise a wireless or cable connection (not shown) for receiving the data from an external storage so as to generate said visual representation. For example, the writing device 50 may comprise a communication module for wireless and/or cable communication with an external data processing unit (see Fig. 6).

In other embodiments, the writing device is not used for reproducing a previously stored image or text, but is used in a hand-held, pen- or brush-type way for directly generating a visual representation on the medium.

In some embodiments, markers and/or a marker layer may be absent from the display medium.

In some embodiments, the writing device is not configured to determine positional information.

In some embodiments, the writing device may comprise a hand-holdable and/or hand-held writing device. In an embodiment, the writing device is a pen-type and/or brush-type writing device. Such a writing device may be operated by a user keeping the writing device in the hand and moving it over the display medium. For example, a user may use the writing device like a pen is used for writing handwritten words or a handmade drawing, for example.

In other embodiments, the writing device is hand-holdable, but not pen-like. For example, the writing device may comprise multiple inducer entities, and may be used to reproduce an electronically stored visual representation by a user keeping the writing device in the hand and wiping the device over the viewing surface 11 of the display medium (e.g. Fig. 6).

In yet another embodiment, the writing device is mounted either stationary and/or movable in an overall arrangement, which may be a printer-type or printer-like assembly. In this assembly, the display medium may be transported, for example automatically, with respect to the writing device 50, for printing a visual representation on the display medium. The writing device 50 may thus be operated as a stationary or moveable printing head, for example.

In some embodiments where the writing device is not configured to determine positional information, for example because a marker layer is absent or because the writing device is not configured to read the markers, the writing device preferably still comprises a sensor and, optionally a light source.

In an embodiment, the data processing entity 56 is configured to determine the type of a color filter that is in operational reach of the inducer entity 52 of the writing device 50.

As has been described above, the display medium 10 preferably comprises a second layer 6 comprising a plurality of color filters 21-23. Particular color filters 21-23 are preferably provided in spatially defined or limited areas 31-33, depending on the particular color filtering property to be achieved by a particular area, as described elsewhere in this specification.

In particular in the case of hand-held writing devices, the latter may be configured to generate a visual representation having a particular color. For example, the writing device may be configurable by a user to produce a given color, e.g. green, blue or red, for example. The writing device may comprise an interface or input unit (not shown) for a user to enter a desired color. For example, the interface may comprise one or more buttons.

In accordance with Fig. 2A, this embodiment can be illustrated assuming a user has selected red color to be drawn by the writing device 50. As the writing device is guided over the viewing surface by the user, for example in a pen-like manner, the inducing entity is preferably activated and/or inactivated as a function of the color filter 21-23 that is below the inducer entity of the writing device, so as to make sure that a visual representation having the desired color, here a red color, is generated. In this embodiment, the inducer entity is activated whenever it is in operational reach with a color filter that is transmissive to green or blue color (mainly or only), such that these colors are removed from the colors reflected by the responsive layer 5, and only red color is displayed. Of course, the writing device may be configured, for example by a user via an input unit, to display any color that can be obtained by additive color mixing.

The writing device is preferably configured to act differentially and/or gradually on appropriate locations and/or spots of the responsive layer, so as to achieve the desired color effect, including colors obtained by additive color mixing, for example by mixing one or more selected from red, green, blue and/or optionally white color components, or other colors.

A marker layer may also be absent in the above-mentioned stationary assemblies, where the display medium is movable with respect to an assembly comprising the writing device. In such configurations, the necessity to determine positional information concerning the display medium in not required for accurate writing, since the display medium will generally have a defined format (A4, A5, letter, etc), and the assembly may thus control the writing device on the basis of the transport of the printing medium through the assembly and said defined format. In such cases, the writing device may still (but need not necessarily) comprise a sensor 55 for detecting the color filter that is in operational reach of the inducer entity 52, as the detection of the color filter may be used for more accurate generation of color.

**Figure 6** shows a writing device 50.1 according to another embodiment. The writing device comprises a plurality of inducer entities 52.1, 52.2, 52.3, up to 52.X. The number of inducer entities (X) may be 2 to 10'000 inducer entities, preferably 3 to 5'000 inducer entities, and even more preferably 5 to 2'000 inducer entities. In a preferred embodiment, the device comprises 10 to 500 inducer entities. Otherwise, the writing device preferably has similar components as the previous embodiments shown in Figs 5A and 5B, such as a data processing entity 56, which here is shown to comprise a wireless communication unit 56.2 and a memory 56.3, in addition to the CPU 56.1. Lines and/or a data bus 61 for electric transfer of data, signals and/or commands is also shown. The device as shown in Fig. 6 is particularly adapted for wireless operation, for example as a hand-held device that is manually moved over the surface of the display medium. The wireless communication unit 56.2 is optional and the invention encompasses writing devices having a plurality of inducer entities, but lacking a wireless communication module. The device 50.1 may also be part of a printing device that is positioned on a support, such as on a table or on the floor, and which is not adapted for being held in the hand. For example, when the writing device 50.1 is used, the display medium may be moved relative to the writing device, and the latter thus preferably remaining immobile during writing. For example, the writing device may comprise a mechanical arrangement provided for moving the display medium relative to the writing device, for example in an automated, computer-controlled manner. Printer-type assemblies have been mentioned herein above. In hand-held devices, typically the witing device would be moved relative to the surface of the display medium.

Thanks to the plurality of inducer entities, a larger surface on the display medium can be written within a given time period. For example, information concerning a visual representation may be stored in memory 56.3 and printed as there is a relative movement between the display medium and the writing device.

The display system 1 and/or the display medium 10 of the invention preferably comprise a way to erase the visual representation that has been written on the display medium. In case of magnetically responsive component in the first layer 5, erasure may be achieved by passing a permanent or electromagnet over the back surface 12, so as to attract the ferrimagnetic and/or ferromagnetic component the position corresponding to the blank display medium, for example as illustrated in Fig. 1.

In case where the first layer 5 comprises a photochromic material, there are again several possibilities for achieving erasure and obtaining the blank viewing surface 11. For example, some photochromic materials are known to turn off automatically, that is passively, to a ground state, as a certain amount of time passes. Another possibility is to switch the photochromic materials to a ground state by illuminating the display with irradiation having the appropriate wavelength and intensity.

For reasons of completeness, it is noted that, with reference to Fig. 2A, the writing device may also be configured to induce the change of position, orientation and/or configuration in ferrimagnetic and/or ferromagnetic particles that are white, while black particles are magnetically inert. For example, in Fig. 2A, the inducer entity 50 may have attracted the white particles instead of having attracted the black particles.

In an embodiment, the writing device 50 is wireless.

In an embodiment, the display medium 10 is wireless.

In accordance with the embodiments shown, one or more selected from the writing device 50, the display medium 10, and indeed the entire display system 1 may lack one or more selected from: (i) an electrical grounding, (ii) a connection to any source of electric power, (iii) electrical wiring, (iv) an electrode. Of course, the invention is not limited to such embodiments but may be, at the option of the person skilled in the art, be provided with electrical wiring and the like.

It is noted that the writing device 50 generally requires a source of power (not shown). The writing device may comprise, for example a battery, in case it completely lacks a cabled connection. The battery may be a rechargeable battery. In an embodiment, the writing device may be temporarily connected with a cable, for example to a power source for recharging and/or to a storage medium or computer for data transfer.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. A full-color, writable-erasable display system (1), comprising:
- a writable-erasable display medium (10); and,
- a writing device (50) suitable for generating a full-color visual representation on the writable-erasable medium (10);
wherein said display medium comprises a first layer (5) comprising a responsive material (81), wherein said responsive material is responsive to light and/or to a magnetic force, and a second layer (6) comprising a plurality of color filters (21-23);
wherein one or more selected from the position, orientation, configuration, and chemical state of said responsive material affects a property of the first layer to absorb and/or reflect light;
wherein said writing device (50) comprises:
- one or more inducer entity (52) suitable to affect the position, configuration, orientation and/or chemical state, respectively, of said responsive material;
- one or more sensor (55) capable of sensing light; and,
- a data processing entity (56) configured to determine, from the signal produced by at least one of said one or more sensor, one or both selected from:
(1) information related to the position of the writing device and/or the inducer entity (52) with respect to the display medium (10), in particular information related to a location (84) of said responsive material (81) that is in operational reach of the inducer entity (52), and,
(2) a type of a color filter that is in vicinity of the inducer entity (52) of the writing device (50).

2. The system (1) of claim 1, wherein said display medium (10) further comprises a marker layer (9), said marker layer comprising markers (91-93) comprising a material that is transparent to visible light and which absorbs IR light, said display medium (10) further preferably comprising a material that at least partially reflects IR light.

3. The system of claim 1 or claim 2, wherein said one or more sensor comprise an IR sensor configured to produce a signal depending on IR light reflected by said display medium (10), preferably at the viewing surface (11) and/or the marker layer.

4. The system of any one of the preceding claims, comprising a marker layer (9) comprising a plurality of markers (91-93) distributed over the viewing surface (11) of the medium, wherein each marker of said plurality of markers comprises a 2D representation that is unique amongst the 2D representations of said plurality of markers.

5. The system of any one of claims 1-4, wherein said data processing entity (56) is configured to determine, on the basis of a signal produced by said sensor (55), if a location (84) of the responsive layer (5) is in operational reach of the inducer entity (52), and to activate or not the inducer entity (52) so as to induce or not a response of the responsive material (81') in that location in dependence of a visual representation to be generated by said writing device (50).

6. The system of any one of claims 1-5, wherein said data processing entity is configured to determine information related to the position of the inducer entity (52) on the viewing surface (11) of the display medium (10).

7. The system of any one of the preceding claims, wherein said color filters are provided in areas, wherein an area (31) comprising a type of color filter (21) provides a sub-pixel, and n areas (31-34) comprising different types of color filters (21-23), optionally including one area (34) lacking a color filter, form a pixel of said display medium.

8. The system (1) of any one of the preceding claims, wherein said plurality of color filters (21-23) comprises first, second, third and optionally more different types of color filters (21-23), wherein three or more different types of color filters are provided in said second layer (6) so as to enable a color display by additive color mixing.

9. The system (1) of any one of the preceding claims, wherein said plurality of color filters (21-23) comprises a first type of color filter, which is transmissive to light of a first color mainly, a second type of color filter, which is transmissive to light of a second color mainly, and a third color filter is transmissive to light of a third color mainly, wherein said first, second and third colors enable said display by additive color mixing.

10. The system of any one of the preceding claims, wherein said responsive material (81) is a magnetically responsive material.

11. The system of claim 10, wherein said magnetically responsive material comprises a ferromagnetic and/or ferrimagnetic component provided movably within said first layer (5) and/or within a compartment and/or region (80) of said first layer, wherein the position and/or orientation of said component within said first layer and/or within said compartment (80) influences a property of said first layer to absorb and/or reflect light.

12. The system of any one of claims 1-11, wherein said responsive material (81') is responsive to light and comprises a photochromic material, wherein a photoisomeric configuration and/or chemical state of said photochromic material affects the first layer's property to absorb and/or reflect light.

13. The system of any one of the preceding claims, wherein, said inducer entity (52) comprises one of the following:
- a magnet, preferably selected from electromagnets and permanent magnets, suitable to exert a magnetic force on said responsive material, said responsive material comprising a ferromagnetic and/or ferrimagnetic material;
- a source of light emitting light having a wavelength suitable to induce a change in the photoisomeric configuration and/or chemical state of said responsive material, said responsive material comprising a photochromic material.

14. The system of any one of the preceding claims, wherein said data processing entity is configured to determine, from the signal produced by at least one of said one or more sensor, the type of color filter that is in vicinity of the inducer entity (52) of the writing device (50).

15. The system of any one of the preceding claims, wherein said writing device (50) is a hand-holdable, writing device, for example a pen-type writing device.

16. A writable-erasable display medium (10) comprising:
a first layer (5) comprising a responsive material (81, 82) that is responsive to light and/or to magnetic force, and,
a second layer (6) comprising a plurality of color filters (21-23);
wherein the position, orientation, configuration and/or chemical state of said responsive material (81, 82) affects the first layer's property to absorb and/or reflect light.

17. The display medium of claim 16, wherein said display medium (10) further comprises a marker layer (9), said marker layer comprising markers (91-93) comprising a material that is transparent to visible light and which absorbs IR light, said display medium (10) further preferably comprising a material that at least partially reflects IR light.

18. The display medium of claim 16 or 17, wherein said one or more sensor comprise an IR sensor configured to produce a signal depending on IR light reflected by said display medium (10), preferably by the viewing surface (11) and/or the marker layer.

19. The display medium of any one of claims 16-18, comprising a marker layer (9) comprising a plurality of markers (91-93) distributed over the viewing surface (11) of the medium, wherein each marker of said plurality of markers comprises a 2D representation that is unique amongst the 2D representations of said plurality of markers.
